# EUROPEAN PATENT SPECIFICATION

(11) **EP 1 321 996 B1**
(45) Date of publication and mention of the grant of the patent: **27.02.2008**
(21) Application number: 02027765.3
(22) Date of filing: 11.12.2002
(51) Int. Cl.: H01M 8/10, C08J 5/22

(54) **Process of producing a polymer electrolyte membrane**
Verfahren zur Herstellung einer Polymerelektrolytmembran
Procédé de production d'une membrane électrolyte en polymère

(30) Priority: 20.12.2001 JP 2001387255; 16.05.2002 JP 2002141362
(43) Date of publication of application: 25.06.2003
(73) Proprietor: Sumitomo Chemical Company, Limited, Tokyo 104-8260 (JP)
(72) Inventor: Terahara, Atsushi, Tsukuba-shi, Ibaraki (JP); Saito, Shin, Tsukuba-shi, Ibaraki (JP)
(74) Representative: Henkel, Feiler & Hänzel

(56) References cited:
- EP-A- 1 248 313
- PATENT ABSTRACTS OF JAPAN vol. 2002, no. 05, 3 May 2002 (2002-05-03) -& JP 2002 012744 A (JSR CORP), 15 January 2002 (2002-01-15)
- PATENT ABSTRACTS OF JAPAN vol. 1997, no. 11, 28 November 1997 (1997-11-28) -& JP 09 199144 A (TOYOTA CENTRAL RES &DEV LAB INC), 31 July 1997 (1997-07-31)

## Description

### FIELD OF THE INVENTION

The present invention relates to a process of producing polymer electrolyte membranes and, more specifically, to a process of producing a polymer electrolyte membrane by coating a solution containing a polymer electrolyte onto a substrate and removing the solvent.

### BACKGROUND OF THE INVENTION

In recent years, various attempts have been made to develop new energy sources with less environmental loads. Among them, fuel cells, particularly solid polymer electrolyte fuel cells composed of solid polymer electrolytes, are expected to be used as power sources for vehicles and the like, since they have such advantage that they exhaust only water as their exhaust substance.

As polymer electrolytes for use in such solid polymer electrolyte fuel cells, various polymer electrolyte membranes have been proposed including membranes obtained from polymer electrolytes such as perfluoroalkylsulfonic acids such as Nafion (a registered trademark owned by DuPont Co.).

Primarily required characteristics for such polymer electrolyte membranes include high proton conductivity. This is because the use of a membrane having high proton conductivity in a fuel cell makes it possible to reduce a voltage drop at a high current density in the operation of the fuel cell thereby causing the fuel cell to output high power.

A casting method such as to apply a solution of a polymer electrolyte in an organic solvent onto a substrate by casting and then remove the solvent at a high temperature to give a membrane is well known as the technology for producing such polymer electrolyte membranes.

For example, there is a known method using, as a casting solvent, a mixed solvent composed of an alcohol having a boiling point of not higher than 100°C, such as methanol, and an organic solvent having a boiling point of higher than 100°C, such as N-methyl-2-pyrrolidone or dimethylacetamide (JP No. 2002-12744A).

On the other hand, there is also known a method of enhancing the proton conductivity of a polymer electrolyte membrane obtained by such a casting method. For example, a method wherein: a mixed solvent of water and propanol is used as a casting solvent; and an obtained polymer electrolyte membrane is heat-treated in water or saturated water vapor, has been proposed (JP No.09-199144A).

However, the former method has the problem that the proton conductivity of a resulting polymer electrolyte membrane is insufficient, and the latter method has the problem that the method requires an additional treatment of a obtained polymer electrolyte membrane and hence is a complicated producing method.

As a result of intensive studies made by the inventors of the present invention to find a polymer electrolyte membrane producing method which gives a polymer electrolyte membrane of high proton conductivity in a convenient and simple way, the inventors have been found that a polymer electrolyte membrane exhibiting strikingly enhanced proton conductivity can be obtained by using a specific mixed solvent containing a first solvent comprising at least one solvent selected from alcohol and water, and a second solvent comprising a non-alcoholic organic solvent having a boiling point lower than that of the first solvent, even without heat-treating the obtained polymer electrolyte membrane in water or saturated water vapor, and have completed the present invention.

EP-A-1248313 which is to be considered as a prior art document under Art. 54(3) and (4) EPC, discloses a polymer electrolyte having, in a main chain, a structural unit represented by the following formula (1):

- [Ar¹- (SO₂-N⁻ (X⁺) -SO₂-Ar²)ₘ-SO₂-N⁻ (X⁺) -SO₂-Ar¹-O] -

wherein Ar¹ and Ar² independently represent a divalent aromatic group, m represents an integer of 0 to 3, and X⁺ represents an ion selected from hydrogen ion, an alkali metal ion and ammonium ion.

### SUMMARY OF THE INVENTION

Accordingly, the present invention provides an industrially excellent method of producing a polymer electrolyte membrane having a higher proton conductivity comprising a step of coating a liquid containing a polymer electrolyte having an aromatic ring in a polymer chain, and an ion exchange group selected from the group consisting of - SO₃H, -COOH, -PO(OH)₂, -POH(OH), -Ph(OH) (Ph represents a phenyl group), -NH₂, -NHR, -NRR', -NRR' R"⁺ and -NH₃⁺ (R, R' and R" represent an alkyl group, a cycloalkyl group or an aryl group), and a solvent onto a substrate, and a step of removing the solvent, wherein the solvent is a mixture of a first solvent comprising at least one selected from alcohol and water, and a second solvent comprising a non-alcoholic organic solvent having a boiling point lower than that of the first solvent, provided that said polymer electrolyte does not include a block copolymer formed by reacting a disulfonylimide oligomer having terminal fluorine groups and composed of di(pentafluorophenyl-sulfonyl)imide and hydroquinonesulfonic acid with a polyether sulfone having terminal hydroxy groups.

The present invention further provides a polymer electrolyte membrane obtained by a process comprising a step of coating a liquid containing a polymer electrolyte having an aromatic ring in a polymer chain and an ion exchange group selected from the group consisting of -SO₃H, -COOH, -PO(OH)₂, -POH (OH) , -Ph(OH) (Ph represents a phenyl group), -NH₂, -NHR, -NRR' R"⁺ and -NH₃⁺ (R, R' and R" represent an alkyl group, a cycloalkyl group or an aryl group), and a solvent onto a substrate, and a step of removing the solvent, wherein the solvent is a mixture of a first solvent comprising at least one selected from alcohol and water, and a second solvent comprising a non-alcoholic organic solvent having a boiling point lower than that of the first solvent, provided that said polymer electrolyte does not include a block copolymer formed by reacting a disulfonylimide oligomer having terminal fluorine groups and composed of di(pentafluorophenyl-sulfonyl)imide and hydroquinonesulfonic acid with a polyether sulfone having terminal hydroxy groups.

### DETAILED DESCRIPTION OF THE INVENTION

The present invention is described in detail as follows.

Polymer electrolytes used in the present invention are polymers of the type which is soluble in a solvent and has an ion exchange group selected from the group consisting of -SO₃H, -COOH, -PO(OH)₂,-POH(OH), -Ph(OH) (Ph represents a phenyl group), -NH₂, -NHR, -NRR', -NRR'R"⁺, and -NH₃⁺ (R, R' and R" represent an alkyl group, a cycloalkyl group, or an aryl group, and the like.). Some or all of these groups may form their salts with respective ion pairs.

Representatives of such polymer electrolytes include, for example, (C) a polymer electrolyte prepared by introducing a sulfonic group and/or a phosphonic group into a polymer chain having an aromatic ring; (E) a polymer electrolyte prepared by introducing a sulfonic group and/or a phosphonic group into a copolymer comprising at least two repeating units selected from the repeating units of the polymers before introducing a sulfonic group or a phosphonic group into the polymer chain for the preparation of corresponding above polymer electrolytes (C) ; and (F) a polymer electrolyte having nitrogen atom in the polymer chain or at the side chain and prepared by introducing an acidic compound, such as sulfuric acid or phosphoric acid, by ionic bond.

Examples of polymer electrolyte (C) described above, in which hetero-atom such as an oxygen atom may exist in the polymer chain, include those polymer electrolytes introduced sulfonic group into homopolymers such as polyether ether ketone, polysulfone, polyethersulfone, poly(aryleneether), polyimide, poly((4-phenoxybenzoyl)-1,4-phenylene), polyphenylene sulfide and polyphenylquinoxalene, or include sulfoarylated polybenzimidazole, sulfoalkylated polybenzimidazole, phosphoalkylated polybenzimidazole (as disclosed by JP No. 09-110982A), and phosphonated poly(phenyleneether) (as disclosed by J. Appl. Polym. Sci., 18, 1969 (1974)).

Polymer electrolyte (E) described above may be a polymer electrolyte introduced a sulfonic group and/or a phosphonic group into a random copolymer, one introduced a sulfonic group and/or a phosphonic group into an alternating copolymer, or one introduced a sulfonic group and/or a phosphonic group into a block copolymer. An example of such a polymer electrolyte introduced a sulfonic group into a random copolymer is a sulfonated polyethersulfone-dihydroxybiphenyl copolymer (as disclosed by JP No. 11-116679A).

Examples of polymer electrolyte (E) of a block copolymer having a sulfonic group and/or a phosphonic group as described above include block copolymer having a sulfonic group and/or a phosphonic group as disclosed by JP No. 2001-250567A.

Examples of polymer electrolyte (F) described above include polybenzimidazole into which phosphoric acid is introduced as described in JP No. 11-503262A.

Among the aforementioned polymer electrolytes, polymer electrolytes (C) and (E) are preferable. More preferable are polymers which have such structure that sulfonic group is introduced into any one of homopolymer, random copolymer and alternating copolymer, and which have an aromatic ring in polymer chain. Most preferable are polymers which have structure introduced sulfonic group into aromatic ring of polymer chain.

The number-average molecular weight of the polymer electrolyte used in the present invention is usually from about 1000 to about 1000000, preferably from about 10000 to about 100000. A polymer electrolyte having a number-average molecular weight of less than 1000 may not be preferable from the viewpoint of a resulting membrane may have a lowered strength. A polymer electrolyte having a number-average molecular weight of more than 1000000 may also not be preferable from the viewpoint that the formation of membrane may be difficult due to the dissolution of the polymer electrolyte in the solvent taking too long time or the viscosity of a resulting solution becoming too high.

The ion exchange group equivalent weight of the polymer electrolyte used in the present invention is usually about 500 to about 5000 g/mol. A polymer electrolyte of which the ion exchange group equivalent weight is lower than 500 g/mol may not be preferable from the viewpoint that the water resistance of a resulting membrane is not sufficient. The above water resistance means the resistance to deteriorating the strength of the membrane or to dissolving membrane due to the absorbing water.

The mixed solvent used in the present invention is a mixture of a first solvent comprising at least one selected from alcohol and water, and a second solvent comprising a non-alcoholic organic solvent having a boiling point lower than that of the first solvent.

Preferable examples of alcohols for use as the first solvent of the present invention include lower alcohols such as methanol, ethanol, 1-propanol and 2-propanol; ether alcohols such as 2-methoxyethanol(ethylene glycol monomethyl ether), diethylene glycol monomethyl ether and diethylene glycol monoethyl ether; and mixtures thereof.

Non-alcoholic organic solvents for use as the second solvent of the present invention can be selected from the solvents having boiling point lower than that of the first solvent. Preferable examples of the non-alcoholic organic solvents may be selected from haloalkanes such as dichloromethane, chloroform, 1,1-dichloroethane, 1,2-dichloroethane and 1,1,1-trichloroethane; ethers such as tetrahydrofuran and diethyl ether; ketones such as acetone and methyl ethyl ketone; nitriles such as acetonitrile; and aprotic polar solvents such as dimethylformamide, dimethylacetamide and dimethyl sulfoxide; or mixtures thereof.

In the case where at least one of the first and second solvents is a mixture of plural solvents, "a second solvent having a boiling point lower than that of the first solvent" means that one having the highest boiling point of the solvents used in the second solvent is lower in boiling point than one having the lowest boiling point of the solvents used in the first solvent.

Preferable examples of specific solvents for use in the present invention include a mixed solvent of methanol and dichloromethane, a mixed solvent of methanol, water and dichloromethane, a mixed solvent of ethanol and dichloromethane, a mixed solvent of 1-propanol and dichloromethane, a mixed solvent of 2-propanol and dichloromethane, a mixed solvent of water, 2-propanol and dichloromethane, a mixed solvent of 2-methoxyethanol and dichloromethane, a mixed solvent of methanol and chloroform, a mixed solvent of ethanol and chloroform, a mixed solvent of 1-propanol and chloroform, a mixed solvent of 2-propanol and chloroform, a mixed solvent of 2-propanol, water and chloroform, a mixed solvent of 2-methoxyethanol and chloroform, a mixed solvent of methanol and diethyl ether, a mixed solvent of ethanol and tetrahydrofuran, a mixed solvent of 1-propanol and tetrahydrofuran, a mixed solvent of 2-propanol and tetrahydrofuran, a mixed solvent of water, 2-propanol and tetrahydrofuran, a mixed solvent of methanol and acetone, a mixed solvent of ethanol and acetone, a mixed solvent of 2-methoxyethanol and acetone, a mixed solvent of 1-propanol and methyl ethyl ketone, a mixed solvent of 2-propanol and methyl ethyl ketone, a mixed solvent of water, 2-propanol and methyl ethyl ketone, a mixed solvent of 2-methoxyethanol and acetonitrile, and a mixed solvent of diethylene glycol monomethyl ether and dimethylacetamide.

More preferable are the mixed solvent of methanol and dichloromethane, mixed solvent of methanol and chloroform, mixed solvent of ethanol and chloroform, mixed solvent of 2-methoxyethanol and acetone, mixed solvent of diethylene glycol monomethyl ether and dimethylacetamide, and the like.

The weight proportions of the first and second solvents to be used are usually 1-40wt% of the first solvent and 60-99wt% of the second solvent, preferably 3-30wt% of the first solvent and 70-97wt% of the second solvent, more preferably 5-25wt% of the first solvent and 75-95wt% of the second solvent.

Usually, the mixed solvent and polymer electrolyte described above are used in a state where the latter is dissolved in the former, that is, a state where the latter is homogeneously dispersed in the former on a molecular scale, or a state where the latter forms aggregates on the order of from nanometers to micrometers, which are dispersed in the former.

In the present invention a liquid containing the polymer electrolyte and a solvent is coating onto a substrate, followed by removing the solvent. There is no particular limitation on such a substrate as long as it has resistance to the solvent and allows the membrane formed thereon to peel off from the substrate. Substrates that are usually usable in the present invention include a glass sheet, PET (polyethylene terephthalate) film, Teflon (a registered trademark owned by DuPont Co.) plate, stainless steel plate, stainless steel belt, silicon wafer, and the like. These substrates may have such surfaces as to be treated for easy releasability, embossed, matt-finished, or treated for other purpose, if necessary.

There is no particular limitation on the amount of the liquid to be coated, the liquid is coated so that the thickness of a membrane to be obtained is usually 5 to 200 µm, preferably 8 to 60 µm, more preferably 15 to 40 µm. From the viewpoint of the strength of the obtained membrane, the membrane preferably has a thickness of more than 5 µm. From the viewpoint of reducing the resistance of the obtained membrane, that is, for improving the power generating performance, the membrane preferably has a thickness of less than 200 µm. It is possible to control the thickness of an obtained membrane by controlling the concentration of polymer electrolyte in the liquid or the amount of liquid to be coated on the substrate.

The liquid containing the polymer electrolyte may further contain a common additive such as a plasticizer, stabilizer, release agent, or water retainer as far as the proton conductivity is not deteriorated considerably.

The removal of the solvent is usually conducted under normal heating condition. The humidity for the removal of the solvent is the relative humidity of the atmosphere or lower. The temperature for removing the solvent is not particularly limited so long as the solvent can be removed and the membrane can be formed, and a temperature not lower than room temperature and lower than the boiling point of the solvent is usually adopted.

In the removal of the solvent, a thermostatic oven is usually used.

A polymer electrolyte membrane is thus obtained.

A fuel cell according to the present invention is described as follows.

The fuel cell of the present invention can be produced by joining a catalyst and an electrically-conductive substance as a collector with a polymer electrolyte membrane obtained as above on both sides of the membrane.

As the catalyst, any known catalyst may be used so long as it is capable of activating the oxidation-reduction reaction between hydrogen and oxygen. Fine particles of platinum as the catalyst is preferably used. Fine particles of platinum supported on particulate or fibrous carbon such as activated carbon or graphite are more preferably used.

Electrically-conductive materials are usable as the collector, a porous carbon nonwoven fabric or carbon paper are preferably used from the viewpoint that source gas may be efficiently transported to the catalyst.

As to the method of joining fine particles of platinum or fine particles of platinum supported on carbon with carbon nonwoven fabric or carbon paper, and the method of joining the resulting product with a polymer electrolyte membrane, it is possible to employ known methods including, for example, the methods described in J. Electrochem. Soc.: Electrochemical Science and Technology, 1988, 135(9), 2209.

### EXAMPLES

Hereinafter, the present invention will be described more specifically by way of examples, which should not be construed to limit the present invention.

### Example 1

According to the method described in Example 1 of JP No. 10-21943A, polycondensation of 4,4'-dihydroxydiphenyl sulfone, 4,4'-dihydroxybiphenyl and 4,4'-dichlorodiphenyl sulfone was conducted, and then the resulting polycondensate was sulfonated to give a polymer electrolyte 1. The ion exchange group equivalent weight of this polymer electrolyte 1 was 909 g/mol.

The polymer electrolyte 1 was dissolved in a mixed solvent of dichloromethane and methanol (dichloromethane:methanol = 87:13 in weight ratio, dichloromethane:methanol = 8:2 in volume ratio) to give a liquid having a concentration of 15wt% of the polymer electrolyte 1. Subsequently, this liquid was casted and coated onto a substrate and the mixed solvent was removed at 80°C in about two hours followed by drying in air, to give a polymer electrolyte membrane 1. The membrane 1 thus obtained was treated with 1 mol/liter hydrochloric acid for two hours and then washed with deionized water for three hours, and thereafter the membrane was sandwiched between a pair of platinum electrodes and then measured for its proton conductivity in a thermo-hydrostatic chamber by the alternating current anodizing method.

Table 1 shows the proton conductivity of the membrane 1 at 80°C and at each relative humidity.

### Example 2

Commercially-available polyether ether ketone (PEEK) was sulfonated by being dissolved in concentrated sulfuric acid and stirred at room temperature for one day, to give a polymer electrolyte 2. The ion exchange group equivalent weight of this polymer electrolyte 2 was 556 g/mol.

The polymer electrolyte 2 was dissolved in a mixed solvent of dichloromethane and methanol (dichloromethane:methanol = 87:13 in weight ratio) to give a mixed solvent solution having a concentration of 15wt%. Subsequently, this solution was casted and coated onto a substrate and the mixed solvent was removed at 80°C in about two hours, to give a polymer electrolyte membrane 2. The proton conductivity of the membrane 2 was measured in the same manner as in Example 1 except the use of the membrane 2.

The proton conductivity of the membrane 2 at 80°C and at each relative humidity is shown in Table 1.

### Comparative Example 1

Using N,N-dimethylacetamide (hereinafter abbreviated as "DMAc") instead of the mixed solvent used in Example 1, a solution having a concentration of 15wt% of polymer electrolyte was obtained. This solution was casted and coated onto a glass substrate and the solvent was removed at 80°C in about five hours, to give a polymer electrolyte membrane 1'. Following the same post-treatment as described in Example 1, the proton conductivity of the membrane 1' was measured in the same manner as in Example 1. The result of the proton conductivity measurement on the membrane 1' is shown in Table 1.

### Comparative Example 2

Using DMAc instead of the mixed solvent used in Example 2, a solution having a concentration of 20wt% of polymer electrolyte was obtained. This solution was casted and coated onto a glass substrate and the solvent was removed at 80°C in about five hours, to give a polymer electrolyte membrane 2'. Following the same post-treatment as described in Example 1, the proton conductivity of the membrane 2' was measured in the same manner as in Example 1. The result of the proton conductivity measurement on the membrane 2' is shown in Table 1.

### Comparative Examples 3 and 4

Using a mixed solvent of DMAc and methanol (DMAc:methanol = 87:13 in weight ratio) instead of the mixed solvents used in respective Examples 1 and 2, polymer electrolyte membranes were obtained in the same manners as in Examples 1 and 2, respectively, and the proton conductivities of the respective membranes were measured in the same manner as described above. The proton conductivities of the respective membranes at 80°C and at each relative humidity are shown in Table 1.

### Comparative Examples 5 and 6

Attempts were made to dissolve polymer electrolyte 1 in methanol and in dichloromethane separately instead of dissolving it in the mixed solvent to prepare respective 15wt% solutions. However, polymer electrolyte 1 was insoluble in each solvent.

### Comparative Examples 7 and 8

Attempts were made to dissolve polymer electrolyte 2 in methanol and in dichloromethane separately instead of dissolving it in the mixed solvent to prepare respective 15wt% solutions. However, polymer electrolyte 2 was insoluble in each solvent.

**[Table 1]**

| | Solvent | Proton Conductivity (S/cm) | | |
|---|---|---|---|---|
| | | 90% RH | 70% RH | 50% RH |
| Example 1 | dichloromethane /methanol | 2.0 × 10⁻² | 7.9 × 10⁻³ | - |
| Example 2 | dichloromethane /methanol | 6.5 × 10⁻² | 2.0 × 10⁻² | 3.3 × 10⁻³ |
| Comparative example 1 | DMAC | 6.2 × 10⁻³ | 2.3 × 10⁻³ | 3.6 × 10⁻⁴ |
| Comparative example 2 | DMAC | 9.4 × 10⁻² | 1.2 × 10⁻² | 1. 3 × 10⁻³ |
| Comparative example 3 | DMAc/methanol | 7.8 × 10⁻³ | 2.6 × 10⁻³ | 3.0 × 10⁻⁴ |
| Comparative example 4 | DMAc/methanol | 5. 6 × 10⁻² | 1. 6 × 10⁻² | 2.1 × 10⁻³ |

According to the present invention, a polymer electrolyte membrane exhibiting enhanced proton conductivity can be obtained by using a specific mixed solvent containing a first solvent comprising at least one solvent selected from alcohol and water, and a second solvent comprising a non-alcoholic organic solvent having a boiling point lower than that of the first solvent, even without the step of heat-treating the obtained polymer electrolyte membrane in water or saturated water vapor.

## Claims

1. A process of producing a polymer electrolyte membrane having a higher proton conductivity comprising a step of coating a liquid containing a polymer electrolyte having an aromatic ring in a polymer chain, and an ion exchange group selected from the group consisting of -SO₃H, -COOH, -PO(OH)₂, -POH(OH), -Ph(OH) (Ph represents a phenyl group), -NH₂, -NHR, -NRR', -NRR' R"⁺ and -NH₃⁺ (R,R' and R" represent an alkyl group, a cycloalkyl group or an aryl group), and a solvent onto a substrate, and a step of removing the solvent, wherein the solvent is a mixture of a first solvent comprising at least one selected from alcohol and water, and a second solvent comprising a non-alcoholic organic solvent having a boiling point lower than that of the first solvent, provided that said polymer electrolyte does not include a block copolymer formed by reacting a disulfonylimide oligomer having terminal fluorine groups and composed of di(pentafluorophenyl-sulfonyl)imide and hydroquinonesulfonic acid with a polyether sulfone having terminal hydroxy groups.

2. The process according to claim 1, wherein the first solvent is an alcohol.

3. The process according to claim 2, wherein the alcohol is at least one selected from the group consisting of methanol, ethanol, 1-propanol, 2-propanol, 2-methoxyethanol, diethylene glycol monomethyl ether and diethylene glycol monoethyl ether.

4. The process according to any one of claims 1 to 3, wherein the non-alcoholic organic solvent is at least one selected from the group consisting of dichloromethane, chloroform, 1,1-dichloroethane, 1,2-dichloroethane, 1,1,1-trichloroethane, tetrahydrofuran, diethyl ether, acetone, methyl ethyl ketone, acetonitrile, dimethylformamide, dimethylacetamide and dimethyl solfoxide.

5. The process according to claim 1, wherein the mixture of the first solvent and the second solvent is one mixture selected from the group consisting of methanol and dichloromethane, methanol and chloroform, ethanol and chloroform, 2-methoxyethanol and acetone, and diethylene glycol monomethyl ether and dimethylacetoamide.

6. The process according to any one of claims 1 to 5, wherein weight proportions of the first and second solvents are 1-40wt% of the first solvent and 60-99wt% of the second solvent.

7. The process according to claim 1 or 4, wherein the polymer electrolyte is a polymer obtained by introducing an ion exchange group into any one of homopolymer, random copolymer or alternating copolymer.

8. The process according to claim 1 or 4, wherein the polymer electrolyte is (a) a polymer electrolyte prepared by introducing a sulfonic group (-SO₃H and/or a phosphonic group (-PO(OH)₂) into a polymer chain having an aromatic ring; or (b) a polymer electrolyte prepared by introducing a sulfonic group (-SO₃H) and/or a phosphonic group (-PO(OH)₂) into a copolymer comprising at least two repeating units selected from the repeating units of the polymers before introducing a sulfonic group or a phosphonic group into the polymer chain for the preparation of the above-mentioned polymer electrolytes (a).

9. The process according to claim 1 or 4, wherein the polymer electrolyte is a polymer obtained by introducing a sulfonic group into an aromatic ring of a polymer chain.

10. A polymer electrolyte membrane obtained by a process comprising a step of coating a liquid containing a polymer electrolyte having an aromatic ring in a polymer chain and an ion exchange group selected from the group consisting of -SO₃H, -COOH, -PO(OH)₂, -POH(OH) , -Ph (OH) (Ph represents a phenyl group), -NH₂, -NHR, -NRR', -NRR'R"⁺ and -NH₃⁺ (R,R' and R" represent an alkyl group, a cycloalkyl group or an aryl group), and a solvent onto a substrate, and a step of removing the solvent, wherein the solvent is a mixture of a first solvent comprising at least one selected from alcohol and water, and a second solvent comprising a non-alcoholic organic solvent having a boiling point lower than that of the first solvent, provided that said polymer electrolyte does not include a block copolymer formed by reacting a disulfonylimide oligomer having terminal fluorine groups and composed of di(pentafluorophenyl-sulfonyl)imide and hydroquinonesulfonic acid with a polyether sulfone having terminal hydroxy groups.

11. A fuel cell comprising the polymer electrolyte membrane according to claim 10.

## Patentansprüche

1. Verfahren zur Herstellung einer Polymerelektrolytmembran mit einer höheren Protonenleitfähigkeit, die eine Stufe der Auftragung einer Flüssigkeit, die einen Polymerelektrolyt, der einen aromatischen Ring in einer Polymerkette und eine Ionenaustauschgruppe, die aus der Gruppe von -SO₃H, -COOH, -PO(OH)₂, -POH(OH), -Ph (OH) (Ph steht für eine Phenylgruppe), -NH₂, -NHR, -NRR', -NRR' R"⁺ und -NH₃⁺ (R, R' und R" stehen für eine Alkylgruppe, Cycloalkylgruppe oder Arylgruppe) ausgewählt ist, aufweist, und ein Lösemittel enthält, auf ein Substrat und eine Stufe der Entfernung des Lösemittels umfasst, wobei das Lösemittel ein Gemisch aus einem ersten Lösemittel, das mindestens einen Bestandteil, der aus einem Alkohol und Wasser ausgewählt ist, umfasst, und einem zweiten Lösemittel, das ein organisches Nichtalkohol-Lösemittel mit einem niedrigeren Siedepunkt als das erste Lösemittel umfasst, ist, wobei der Polymerelektrolyt kein Blockcopolymer, das durch Reaktion eines Disulfonylimidoligomers, das terminale Fluorgruppen aufweist und aus Di(pentafluorphenyl-sulfonyl)imid und Hydrochinonsulfonsäure gebildet ist, mit einem Polyethersulfon mit terminalen Hydroxygruppen gebildet wurde, umfasst.

2. Verfahren nach Anspruch 1, wobei das erste Lösemittel ein Alkohol ist.

3. Verfahren nach Anspruch 2, wobei der Alkohol mindestens ein Alkohol ist, der aus der Gruppe von Methanol, Ethanol, 1-Propanol, 2-Propanol, 2-Methoxyethanol, Diethylenglykolmonomethylether und Diethylenglykolmonoethylether ausgewählt ist.

4. Verfahren nach einem der Ansprüche 1 bis 3, wobei das organische Nichtalkohol-Lösemittel mindestens ein Lösemittel ist, das aus der Gruppe von Dichlormethan, Chloroform, 1,1-Dichlorethan, 1,2-Dichlorethan, 1,1,1-Trichlorethan, Tetrahydrofuran, Diethylether, Aceton, Methylethylketon, Acetonitril, Dimethylformamid, Dimethylacetamid und Dimethylsulfoxid ausgewählt ist.

5. Verfahren nach Anspruch 1, wobei das Gemisch aus dem ersten Lösemittel und dem zweiten Lösemittel ein Gemisch ist, das aus der Gruppe von Methanol und Dichlormethan, Methanol und Chloroform, Ethanol und Chloroform, 2-Methoxyethanol und Aceton, und Diethylenglykolmonomethylether und Dimethylacetamid ausgewählt ist.

6. Verfahren nach einem der Ansprüche 1 bis 5, wobei die Gewichtsanteile des ersten und zweiten Lösemittels 1 - 40 Gew.-% für das erste Lösemittel und 60 - 99 Gew.-% für das zweite Lösemittel betragen.

7. Verfahren nach Anspruch 1 oder 4, wobei der Polymerelektrolyt ein Polymer ist, das durch Einführen einer Ionenaustauschgruppe in ein beliebiges aus einem Homopolymer, statistischen Copolymer oder alternierenden Copolymer erhalten wurde.

8. Verfahren nach Anspruch 1 oder 4, wobei der Polymerelektrolyt
(a) ein Polymerelektrolyt, der durch Einführen einer Sulfongruppe (-SO₃H) und/oder einer Phosphongruppe (-PO(OH)₂) in eine Polymerkette mit einem aromatischen Ring hergestellt wurde, oder
(b) ein Polymerelektrolyt, der durch Einführen einer Sulfongruppe (-SO₃H) und/oder einer Phosphongruppe (-PO(OH)₂) in ein Copolymer, das mindestens zwei Wiederholungseinheiten umfasst, die aus den Wiederholungseinheiten der Polymere vor Einführen einer Sulfongruppe oder Phosphongruppe in die Polymerkette zur Herstellung der oben genannten Polymerelektrolyte (a) ausgewählt sind, hergestellt wurde, ist.

9. Verfahren nach Anspruch 1 oder 4, wobei der Polymerelektrolyt ein Polymer ist, das durch Einführen einer Sulfongruppe in einen aromatischen Ring einer Polymerkette erhalten wurde.

10. Polymerelektrolytmembran, die durch ein Verfahren erhalten wurde, das eine Stufe der Auftragung einer Flüssigkeit, die einen Polymerelektrolyt, der einen aromatischen Ring in einer Polymerkette und eine Ionenaustauschgruppe, die aus der Gruppe von -SO₃H, -COOH, -PO(OH)₂, -POH(OH), -Ph(OH) (Ph steht für eine Phenylgruppe), -NH₂, -NHR, -NRR', -NRR'R"⁺ und -NH₃⁺ (R, R' und R" stehen für eine Alkylgruppe, Cycloalkylgruppe oder Arylgruppe) ausgewählt ist, aufweist, und ein Lösemittel enthält, auf ein Substrat und eine Stufe der Entfernung des Lösemittels umfasst, wobei das Lösemittel ein Gemisch aus einem ersten Lösemittel, das mindestens einen Bestandteil, der aus einem Alkohol und Wasser ausgewählt ist, umfasst, und einem zweiten Lösemittel, das ein organisches Nichtalkohol-Lösemittel mit einem niedrigeren Siedepunkt als das erste Lösemittel umfasst, ist, wobei der Polymerelektrolyt kein Blockcopolymer, das durch Reaktion eines Disulfonylimidoligomers, das terminale Fluorgruppen aufweist und aus Di(pentafluorphenyl-sulfonyl)imid und Hydrochinonsulfonsäure gebildet ist, mit einem Polyethersulfon mit terminalen Hydroxygruppen gebildet wurde, umfasst.

11. Brennstoffzelle, die die Polymerelektrolytmembran nach Anspruch 10 umfasst.

## Revendications

1. Procédé de production d'une membrane électrolyte polymère, ayant une conductivité protonique supérieure, comprenant une étape consistant à déposer un liquide contenant un électrolyte polymère ayant un cycle aromatique dans une chaîne polymère et un groupe d'échange ionique choisi dans le groupe constitué de -SO₃H, -COOH, -PO(OH)₂, - POH(OH), -Ph(OH) (Ph représente un groupe phényle), -NH₂, -NHR, -NRR', -NRR'R"⁺ et - NH₃⁺ (R, R' et R" représentent un groupe alkyle, un groupe cycloalkyle ou un groupe aryle), et un solvant sur un substrat, et une étape consistant à éliminer le solvant, où le solvant est un mélange d'un premier solvant comprenant au moins un solvant choisi parmi l'alcool et l'eau, et d'un deuxième solvant, comprenant un solvant organique non alcoolique ayant un point d'ébullition inférieur à celui du premier solvant, à la condition que ledit électrolyte polymère ne comprenne pas un copolymère à bloc formé par réaction d'un oligomère de disulfonylimide ayant des groupes terminaux fluor et constitué de di(pentafluorophénylsulfonyl)imide et d'acide hydroquinonesulfonique avec une polyéther-sulfone ayant des groupes terminaux hydroxy.

2. Procédé selon la revendication 1, dans lequel le premier solvant est un alcool.

3. Procédé selon la revendication 2, dans lequel l'alcool est au moins un alcool choisi dans le groupe constitué du méthanol, de l'éthanol, du 1-propanol, du 2-propanol, du 2-méthoxyéthanol, de l'éther monométhylique de diéthylène glycol et de l'éther monoéthylique de diéthylène glycol.

4. Procédé selon l'une quelconque des revendications 1 à 3, dans lequel le solvant organique non alcoolique est au moins un solvant choisi dans le groupe constitué par le dichlorométhane, le chloroforme, le 1,1-dichloroéthane, le 1,2-dichloroéthane, le 1,1,1-trichloroéthane, le tétrahydrofurane, l'éther diéthylique, l'acétone, la méthyléthylcétone, l'acétonitrile, le diméthylformamide, le diméthylacétamide et le diméthylsulfoxyde.

5. Procédé selon la revendication 1, dans lequel le mélange du premier solvant et du deuxième solvant est un mélange choisi dans le groupe constitué par le méthanol et le dichlorométhane, le méthanol et le chloroforme, l'éthanol et le chloroforme, le 2-méthoxyéthanol et l'acétone, et l'éther monométhylique de diéthylène glycol et le diméthylacétoamide.

6. Procédé selon l'une quelconque des revendications 1 à 5, dans lequel les proportions en poids des premier et deuxième solvants sont de 1 à 40 % en poids du premier solvant et 60 à 99 % en poids du deuxième solvant.

7. Procédé selon la revendication 1 ou 4, dans lequel l'électrolyte polymère est un polymère obtenu par introduction d'un groupe d'échange ionique dans un quelconque parmi un homopolymère, copolymère aléatoire ou copolymère alterné.

8. Procédé selon la revendication 1 ou 4, dans lequel l'électrolyte polymère est (a) un électrolyte polymère préparé par introduction d'un groupe sulfonique (-SO₃H) et/ou d'un groupe phosphonique (-PO(OH)₂) dans une chaîne polymère ayant un cycle aromatique ; ou (b) un électrolyte polymère préparé par introduction d'un groupe sulfonique (-SO₃H) et/ou d'un groupe phosphonique (-PO(OH)₂) dans un copolymère comprenant au moins deux motifs récurrents choisis parmi les motifs récurrents des polymères avant introduction d'un groupe sulfonique ou d'un groupe phosphonique dans la chaîne polymère pour la préparation des électrolytes polymères susmentionnés (a).

9. Procédé selon la revendication 1 ou 4, dans lequel l'électrolyte polymère est un polymère obtenu par introduction d'un groupe sulfonique dans un cycle aromatique d'une chaîne polymère.

10. Membrane électrolyte polymère obtenue par un procédé, comprenant une étape consistant à déposer un liquide contenant un électrolyte polymère ayant un cycle aromatique dans une chaîne polymère et un groupe d'échange ionique choisi dans le groupe constitué de -SO₃H, -COOH, -PO(OH)₂, -POH(OH), -Ph(OH) (Ph représente un groupe phényle), -NH₂, - NHR, -NRR', -NRR'R"⁺ et -NH₃⁺ (R, R' et R" représentent un groupe alkyle, un groupe cycloalkyle ou un groupe aryle), et un solvant sur un substrat, et une étape consistant à éliminer le solvant, où le solvant est un mélange d'un premier solvant comprenant au moins un solvant choisi parmi l'alcool et l'eau, et d'un deuxième solvant, comprenant un solvant organique non alcoolique ayant un point d'ébullition inférieur à celui du premier solvant, à la condition que ledit électrolyte polymère ne comprenne pas un copolymère à bloc formé par réaction d'un oligomère de disulfonylimide ayant des groupes terminaux fluor et constitué de di(pentafluorophényl-sulfonyl)imide et d'acide hydroquinonesulfonique avec une polyéther-sulfone ayant des groupes terminaux hydroxy.

11. Pile à combustible comprenant la membrane électrolyte polymère selon la revendication 10.
